# EUROPEAN PATENT APPLICATION

(11) **EP 2 944 367 A1**
(43) Date of publication of application: **18.11.2015**
(21) Application number: 14168652.7
(22) Date of filing: 16.05.2014
(51) Int. Cl.: B01D 53/14, B01D 53/75, B01D 53/86

(54) **Process for reducing the total sulphur content of a gas stream**

(71) Applicant: SHELL INTERNATIONAL RESEARCH MAATSCHAPPIJ B.V., 2596 HR Den Haag (NL)
(72) Inventor: ITO, Eri, 1031HW Amsterdam (NL); JANSSEN, Andries Hendrik, 1031HW Amsterdam (NL); KIJLSTRA, Wiebe S, 1031HW Amsterdam (NL)
(74) Representative: Matthezing, Robert Maarten

(57) **Abstract**

The invention relates to a process for reducing the total sulphur content of a gas stream comprising hydrogen sulphide and sulphur dioxide, which process comprises:
(a) contacting the gas stream comprising hydrogen sulphide and sulphur dioxide first with a hydrogenation catalyst and then with a hydrolysis catalyst, in the presence of a reducing gas and under hydrogenation conditions, to obtain a hydrogenated gas stream enriched in hydrogen sulphide; and
(b) removing hydrogen sulphide from the gaseous stream enriched in hydrogen sulphide, wherein the hydrogenation catalyst comprises nickel and molybdenum on an alumina carrier and the hydrolysis catalyst is a catalyst capable of catalysing hydrolysis of carbonyl sulphide to form hydrogen sulphide.

## Description

### Field of the invention

The present invention relates to a process for reducing the total sulphur content of a gas stream comprising hydrogen sulphide and sulphur dioxide, for instance an off-gas of a sulphur recovery process, such as a Claus process.

### Background to the invention

Gases containing substantial amounts of hydrogen sulphide are suitably treated in a Claus sulphur recovery process. The acid feed gas to such Claus process usually contains more than 50 volume % of hydrogen sulphide. As is commonly known in the art, in the Claus process hydrogen sulphide is first partially combusted to form sulphur dioxide in a thermal zone, after which most of the remaining hydrogen sulphide is reacted with sulphur dioxide to form elemental sulphur and water in the thermal zone and in one or more subsequent catalytic zones. Claus units can typically achieve a sulphur recovery efficiency, i.e. sulphur yield in wt% based on the sulphur present in the acid feed gas, of between 94 and 96 wt%. This implies that the off-gas of a Claus unit still contains some hydrogen sulphide. Other components present in such Claus off-gas normally are sulphur dioxide, elemental sulphur, and minor quantities of carbonyl sulphide and carbon disulphide, hydrogen, nitrogen, water vapour, carbon dioxide, and carbon monoxide. This Claus off-gas therefore has to undergo a subsequent treatment in order to further reduce the total sulphur content. The present invention relates to an improved process suitable for such a subsequent treatment.

A known method for reducing the level of sulphur components in a Claus off-gas is subjecting such gas to a catalytic reduction treatment at a temperature above 175 °C using a reducing gas comprising hydrogen and/or carbon monoxide, thereby converting the sulphur components other than hydrogen sulphide into hydrogen sulphide, and subsequently removing the bulk of hydrogen sulphide, for example by an absorption treatment using a suitable hydrogen sulphide-selective absorption solvent. The catalyst used for reducing the Claus off-gas comprises a Group VI metal and/or a Group VIII metal supported on an inorganic oxide carrier. After the absorption treatment, the absorption solvent containing the bulk of the hydrogen sulphide is regenerated. The desorbed hydrogen sulphide thus obtained is returned to the Claus sulphur recovery unit, whilst the regenerated solvent is re-used in the absorption treatment. The final off-gas from the absorption treatment contains only minor amounts of hydrogen sulphide and is released into the atmosphere, preferably after an incineration treatment for further reducing the hydrogen sulphide content by converting hydrogen sulphide into sulphur dioxide.

In the reduction stage of the known process, the main reactions are the hydrogenation of carbon disulphide, sulphur dioxide and Sx (x having a value of from 1 to 8) present in the Claus off-gas to form hydrogen sulphide, and the hydrolysis of carbonyl sulphide and carbon disulphide to form hydrogen sulphide and carbon dioxide. Carbon monoxide present in the reducing gas may suitably react with water to form carbon dioxide and hydrogen, but the carbon monoxide present may also react with hydrogen sulphide and/or Sx forming carbonyl sulphide which obviously is undesired. Hydrogenation and hydrolysis, accordingly, take place in a single process step using a single catalyst.

In WO 98/07502 is disclosed a process for reducing the total sulphur content of a gas stream such as a Claus off-gas wherein the hydrogenation/hydrolysis step takes place by contacting the gas stream, in the presence of a reducing gas, first with a hydrogenation catalyst comprising hydrogenating metal on a carrier of amorphous silica-alumina and then over a hydrolysis catalyst. It is mentioned in WO 98/07502 that as a result of using a hydrogenation catalyst based on an amorphous silica-alumina carrier, the hydrogenation can be carried out at a lower temperature than in conventional hydrogenation processes for Claus off-gas. Such lower temperature has certain advantages. An important advantage is that less heating is needed in order to heat off-gas of a Claus unit, typically having a temperature in the range of from 130 to 200 °C, to the required inlet temperature of the hydrogenation/hydrolysis step. In some processes, an expensive in-line burner for heating the Claus off-gas prior to being fed to the hydrogenation/hydrolysis step could even be dispensed with.

There is, however, still a need for improvement of processes for reducing the sulphur content of hydrogen sulphide comprising gases such as Claus off-gases, in particular in terms of removal of sulphur compounds such as carbonyl sulphide.

### Summary of the invention

It has now been found that if a gas stream comprising hydrogen sulphide and sulphur dioxide is first contacted with a hydrogenation catalyst comprising NiMo supported on an alumina carrier and then with a hydrolysis catalyst under hydrogenating conditions, the process is improved compared to a process wherein a stacked bed of a hydrogenation catalyst with NiMo on a carrier of amorphous silica-alumina over a hydrolysis catalyst is used. In particular the carbon monoxide and the carbonyl sulphide conversions are improved, whilst the process can still be carried out at a relatively low temperature.

Accordingly, the invention relates to a process for reducing the total sulphur content of a gas stream comprising hydrogen sulphide and sulphur dioxide, which process comprises:
(a) contacting the gas stream comprising hydrogen sulphide and sulphur dioxide first with a hydrogenation catalyst and then with a hydrolysis catalyst, in the presence of a reducing gas and under hydrogenation conditions, to obtain a hydrogenated gas stream enriched in hydrogen sulphide; and
(b) removing hydrogen sulphide from the gaseous stream enriched in hydrogen sulphide,
wherein the hydrogenation catalyst comprises nickel and molybdenum on an alumina carrier and the hydrolysis catalyst is a catalyst capable of catalysing hydrolysis of carbonyl sulphide to form hydrogen sulphide.

Since the process according to the invention can be carried out at a relatively low temperature in hydrogenation and hydrolysis step (a), less thermal energy is needed. In some situations an in-line burner for heating the feed gas, such as for example a Claus off-gas, to the required inlet temperature may even be dispensed with. A further advantage of a lower operating temperature is that it makes an effective integration with a Claus unit possible.

It has, moreover, been found that in the process according to the invention more carbonyl sulphide is converted than in a process wherein a stacked bed with a hydrogenation catalyst supported on amorphous silica-alumina upstream of a hydrolysis catalyst is used. It has further been found that in the process according to the invention more carbon monoxide is converted into carbon dioxide and hydrogen than in a process wherein a stacked bed with a hydrogenation catalyst supported on amorphous silica-alumina upstream of a hydrolysis catalyst is used. As a result of such increased carbon monoxide conversion, more exothermic heat is produced in step (a) and step (a) can advantageously be operated at a lower inlet temperature.

### Detailed description of the invention

In the process according to the invention, a gas stream comprising hydrogen sulphide and sulphur dioxide is first contacted with a hydrogenation catalyst and then with a hydrolysis catalyst, to obtain a gaseous stream enriched in hydrogen sulphide (step (a)). In a subsequent step (b), hydrogen sulphide is removed from the gaseous stream enriched in hydrogen sulphide.

The hydrogenation catalyst comprises nickel and molybdenum on an alumina carrier. The hydrolysis catalyst may be any catalyst capable of catalysing hydrolysis of carbonyl sulphide to form hydrogen sulphide. The hydrogenation catalyst and the hydrolysis catalyst are preferably contained in a single reactor in a stacked bed configuration.

Step (a) is carried out in the presence of a reducing gas and under hydrogenating conditions. The hydrogenating conditions may be any suitable hydrogenating conditions under which sulphur dioxide and other sulphur compounds such as carbonyl sulphide are hydrogenated to form hydrogen sulphide. It has been found that in step (a) of the process according to the invention, sulphur compounds are effectively hydrogenated, also at relatively low temperatures, i.e. at temperatures below 280 °C, or even below 260 °C, or even below 240 °C. It has been found that it is possible to lower the temperature at which the hydrogenation is carried out to a value in the range of from 150 to 250 °C, preferably of from 175 to 220 °C. Thus it becomes possible to reduce the amount of thermal energy needed or even to dispense with an in-line burner for heating the feed gas.

The hydrogenating conditions preferably comprise a temperature in the range of from 150 to 320 °C, more preferably of from 180 to 280 °C, even more preferably of from 200 to 260 °C, even more preferably of from 210 to 240 °C.

Reference herein to the temperature in step (a) is to the inlet temperature of the gas stream contacted with the hydrogenation catalyst, unless otherwise specified.

The hydrogenating conditions preferably comprise a pressure in the range from 0.7 to 2 bar (absolute).

The reducing gas may be any suitable gas stream comprising a reducing compound such as hydrogen or carbon monoxide. Preferably, the reducing gas comprises hydrogen and/or carbon monoxide. In terms of reducing capacity carbon monoxide is equivalent to hydrogen, as it is able to form hydrogen in situ upon reaction with water according to the reaction equation:

CO + H₂O <=> CO₂ + H₂

The reducing gas at least provides the stoichiometric quantity of hydrogen and/or carbon monoxide required to completely convert sulphur dioxide and Sx present in the gas stream into hydrogen sulphide. Preferably, however, between 1.2 and 2.0 times the stoichiometric quantity of hydrogen and/or carbon monoxide is provided with the reducing gas. Larger quantities may be supplied, but this is not practical, mainly for economic reasons. If Claus off-gas is used as feed gas in the process according to the invention, the feed gas may already contain sufficient hydrogen and carbon monoxide. In that case, there is no need to add additional reducing gas to the gas stream to be treated. In case supply of additional reducing gas is desired, a suitable way to attain the additional supply is by sub-stoichiometric operation of an in-line burner, thereby forming hydrogen and carbon monoxide.

The gas stream comprising hydrogen sulphide and sulphur dioxide and the reducing gas may be supplied to the step (a) at any suitable gas hourly space velocity (GHSV). Preferably the total gas stream, i.e. the total of the gas stream comprising hydrogen sulphide and sulphur dioxide and any additional reducing gas, is supplied at a GHSV in the range of from 500 to 3,000 Nl/l/h (normal litres gas per litre catalyst per hour; normal litres are litres at a temperature of 0 °C and a pressure of 1 atmosphere), more preferably of from 1,000 to 2,000 Nl/l/h.

The term total sulphur content used herein refers to the content of all sulphur-containing compounds together present in a gas stream.

The carrier of the hydrogenation catalyst is an alumina carrier. Reference herein to an alumina carrier is to a carrier that comprises at least 90 wt% alumina (Al₂O₃). Preferably the alumina carrier comprises at least 95 wt% alumina, more preferably at least 98 wt%, even more preferably the alumina carrier essentially consists of alumina.

The hydrogenation catalyst comprises nickel and molybdenum supported on the alumina carrier. These metals may be present as oxide, as sulphide or as a combination of two or more of these forms. Preferably, the nickel and molybdenum are at least partially present in sulphided form. The molybdenum is suitably present in an amount of from 1 to 35% by weight, preferably from 5 to 25% by weight, and the nickel in an amount of from 0.5 to 15% by weight, preferably from 1 to 10% by weight. All weight percentages are indicating the amount of metal based on total weight of carrier.

In step (a), hydrolysis takes place by contacting the gas stream that has first been contacted with the hydrogenation catalyst, i.e. an at least partially reduced or hydrogenated gas stream, with a catalyst capable of catalysing the hydrolysis of carbonyl sulphide to form hydrogen sulphide. Preferably, no intermediate treatment, such as cooling, takes place between the contacting with the hydrogenation catalyst and the contacting with the hydrolysis catalyst. As the hydrolysis catalyst any catalyst which is known in the art to catalyse the hydrolysis of carbonyl sulphide to form hydrogen sulphide may be used. The hydrolysis catalyst should preferably not promote any reaction yielding carbonyl sulphide, such as the sour gas shift reaction:

H₂S + CO <=> H₂ + COS

It is known that particularly (Bronstedt) basic hydroxyl groups, such as those present on inorganic oxides like alumina and titania, catalyse the carbonyl sulphide hydrolysis reaction. Hence, non-promoted alumina, titania or mixtures thereof may suitably be applied as hydrolysis catalyst in step (a) of the present process. Optionally, basic compounds, such as cerium oxide (CeO₂), zirconium oxide (ZrO₂), alkali metal oxides (Na₂O, K₂O) and/or hydroxides (NaOH, KOH) and alkaline earth metal oxides (BaO, MgO, CaO) and/or hydroxides (Ba(OH)₂, Mg(OH)₂,Ca(OH)₂) may be added. If present at all, such basic compounds suitably constitute from 0.1 to 20% by weight, preferably from 1 to 15% by weight, of the hydrolysis catalyst calculated as metal. For the purpose of the present invention a hydrolysis catalyst comprising alumina and CeO₂ and a catalyst comprising titania have been found particularly useful. Preferably, the hydrolysis catalyst comprises titania, more preferably essentially consists of titania. The gas stream contacting the hydrolysis catalyst normally comprises sufficient water vapour, i.e. at least the required stoichiometric amount, for hydrolysing the carbonyl sulphide and any carbon disulphide present.

The hydrogenation and hydrolyis catalysts used in step (a) are suitably sulphided prior to operating the process according to the present invention. Such pre-sulphiding may be performed by methods known in the art, for instance according to the methods disclosed in European patent applications Nos. 181,254; 329,499; 448,435 and 564,317 and International patent applications Nos. WO 93/02793 and WO 94/25157. It is preferred in the process according to the present invention that the nickel and molybdenum are at least partly present in the catalyst as sulphides.

The hydrogenation and hydrolysis in step (a) of the process according to the present invention can be carried out in several configurations. For instance, hydrogenation and hydrolysis may be carried out in two separate reactors. Although this is a relatively expensive option, it provides optimal flexibility in terms of process control and therefore may be desirable to apply. It may for example allow cooling between hydrogenation in a first reactor and hydrolysis in a second reactor and therewith removal of (part of) the thermal heat produced in the exothermal reactions. Particularly, if an existing two reactor configuration is available for modification, this configuration may be very attractive.

Hydrogenation and hydrolysis are preferably carried out in a single reactor. It will be appreciated that from a cost perspective this is very attractive. One very suitable single reactor configuration is a stacked bed consisting of a bed of hydrogenation catalyst and a bed of hydrolysis catalyst. In this stacked bed configuration the two beds are arranged in such manner that the feed gas (the gas stream comprising hydrogen sulphide and sulphur dioxide) is first passed through the bed of hydrogenation catalyst and subsequently through the bed of hydrolysis catalyst. The feed gas will typically pass through the reactor either in an upward or in a downward direction. The volume ratio of hydrogenation catalyst bed to hydrolysis catalyst bed is predominantly determined by the amount of sulphur constituents to be hydrogenated into hydrogen sulphide and the amount of carbonyl sulphide to be hydrolysed.

Generally, the volume ratio of hydrogenation catalyst bed to hydrolysis catalyst bed will be in the range of from 50:50 to 95:5, preferably from 60:40 to 90:10. Another suitable single reactor configuration is a configuration, wherein the single reactor comprises at least one bed, preferably one bed, consisting of a mixture of hydrogenation catalyst particles and hydrolysis catalyst particles. Such mixture may be a completely random mixture of both catalysts, but is preferably a mixture wherein the concentration of hydrogenation catalyst gradually decreases in the direction of the flow of feed gas. The sulphur-containing molecules present in the feed gas, which are to be hydrogenated to form hydrogen sulphide, will always contact a hydrogenation catalyst particle somewhere in the catalyst bed, whilst any carbonyl sulphide (and carbon disulphide) molecule present in the feed gas or formed by reduction of carbon disulphide, or reaction of sulphur dioxide, hydrogen sulphide or Sx with carbon monoxide upon contact with the hydrogenation catalyst, will contact a hydrolysis catalyst particle. The volume ratio of hydrogenation catalyst particles to hydrolysis catalyst particles in a mixed catalyst bed will be in the range of from 50:50 to 99:1, preferably from 60:40 to 95:5, more preferably from 65:35 to 90:10. A combination of stacked bed and mixed catalyst may also be applied. Such combination may, for instance, comprise in the direction of the flow of feed gas a bed of hydrogenation catalyst and a bed containing a mixture of hydrogenation catalyst and hydrolysis catalyst, optionally with a decreasing concentration of hydrogenation catalyst in the direction of the gas flow. Another suitable combination is a mixed bed, preferably with a decreasing concentration of hydrogenation catalyst in the direction of the gas flow, in combination with a bed of hydrolysis catalyst. For these combinations the same overall volume ratio of hydrogenation catalyst to hydrolysis catalyst applies.

In certain cases it may be desired to contact the feed gas with a bed of hydrolysis catalyst prior to subjecting it to combines hydrogenation and hydrolysis step (a) of the process according to the present invention. This may, for instance, conveniently be achieved by arranging a bed of hydrolysis catalyst upstream of the bed comprising the hydrogenation catalyst. Such preceding hydrolysis treatment may be particularly useful when the feed gas contains substantial amounts (i.e. more than 500 ppmv) of carbon disulphide. Upon contact with a hydrogenation catalyst, namely, carbon disulphide may react with hydrogen to form mercaptans, which are difficult to convert further into hydrogen sulphide. In view of the unpleasant odour of mercaptans and the fact that in a subsequent incineration treatment they contribute to the amount of sulphur dioxide released into the air, it is preferred to keep the level of mercaptans formed as low as possible.

By first contacting the carbon disulphide-containing feed gas with a hydrolysis catalyst, carbon disulphide is hydrolysed to form carbonyl sulphide, which is readily further hydrolysed into hydrogen sulphide. In this way the carbon disulphide content is strongly reduced prior to contact with the hydrogenation catalyst, so that any formation of mercaptans is effectively prevented. In case of a single reactor configuration any preceding hydrolysis may suitably be effected by arranging a bed of hydrolysis catalyst, preferably the same catalyst as used in step (b) of the present process, upstream of the bed comprising the hydrogenation catalyst. In case of a stacked bed process this implies that the stacked bed is extended with a third bed upstream of the original two-bed arrangement. The volume of such possible initial hydrolysis catalyst bed relative to the subsequent catalyst beds is determined by the carbon disulphide content of the feed gas, but will normally range from 1:99 to 30:70, preferably from 5:95 to 20:80.

Particles size of the catalyst particles to be used in the process according to the present invention may range within wide limits and are those commonly applied and commercially available. Suitable particle sizes, then, are diameters of from 0.5 mm to 15 mm, more suitably 1 to 5 mm. The catalyst particles may be used in any shape known in the art, such as spheres, wheels, trilobes and quadrulobes.

In step (b) of the process according to the present invention the hydrogen sulphide present in the effluent gas from step (a) is removed, thus obtaining a product gas having a reduced sulphur content. Removal of hydrogen sulphide from the sour gas obtained in step (a) can be achieved by various methods known in the art. Chemical absorption processes using liquid hydrogen sulphide-selective absorbents are widely used and very suitable for the purpose of the present invention. Frequently applied absorbents include aqueous solutions of alkanolamines, such as mono-ethanolamine, di-ethanolamine, di-isopropanolamine, and aqueous mixtures of di-isopropanolamine or methyldiethanolamine and sulfolane. Generally, such absorption treatment involves an absorption step, in which the hydrogen sulphide-containing gas is contacted with the liquid absorbent in an absorption column, and a regeneration step, in which the hydrogen sulphide is again removed from the absorbent. The desorbed hydrogen sulphide thus obtained is normally returned to the Claus sulphur recovery process, whilst the regenerated absorbent is recycled to the absorption column. The final off-gas from the absorption treatment is now often subjected to a thermal or catalytic incineration treatment for converting the minor amounts of hydrogen sulphide still present with oxygen into sulphur dioxide, after which the incinerated gas is released into the air.

Alternatively, step (b) may involve a method for removing hydrogen sulphide from the product gas obtained in step (a) by reacting the hydrogen sulphide with an aqueous solution of a polyvalent metal ion or chelate in a redox reaction to form elemental sulphur and a reduced state of the polyvalent metal ion or chelate, which in a subsequent regeneration step is converted back into the original polyvalent metal ion or chelate by reacting it with a suitable oxidizing agent, such as oxygen. Iron is generally applied as the polyvalent metal, whilst suitable chelating agents include ethylenediamine tetraacetic acid (EDTA) and nitrilotriacetic acid (NTA). Phosphate and thiosulphate ions, or precursors thereof, may be present in the initial redox mixture for increasing the size of the sulphur crystals formed. The elemental sulphur formed is recovered from the aqueous reaction mixture. Examples of such hydrogen sulphide removal processes are, for instance, disclosed in European Patent Applications Nos. 0,066,310; 0,152,647; 0,186,235 and 0,215,505.

As a further alternative, step (b) may be involve a biological oxidation method wherein hydrogen sulphide is first dissolved in an aqueous solvent, such as for example a potassium carbonate solution, and the dissolved sulphides are then oxidized by means of sulphide oxidizing bacteria. Such biological oxidation methods are known in the art, for example from WO92/10270.

As has been indicated hereinabove, it is an advantage of the process according to the present invention that effective integration with a Claus unit, particularly with a three stage Claus unit, is possible due to the lower operating temperature applied. Such integration could typically involve loading the last reactor in such a Claus unit with the hydrogenation catalyst and the hydrolysis catalyst used in step (a) of the present process. This is evidently very attractive from a process economics point of view.

The invention is further illustrated my means of the following non-limiting examples.

### Examples

In model experiments, a pre-heated feed gas stream comprising hydrogen sulphide, sulphur dioxide, and hydrogen as reducing gas, was supplied at a gas hourly space velocity of 1,100 Nl/l/h to a bench-scale reactor containing a stacked bed of a pre-sulphided hydrogenation catalyst (168 ml) upstream of a hydrolysis catalyst (82 ml). The composition of the feed gas is given in Table 1. The reactor was isothermally operated and maintained at a temperature in the range of from 210 to 260 °C and at a pressure of 1.6 bar (absolute). The gaseous effluent of the reactor was analysed by gas chromatography to determine its composition.

In four different experiment, different stacked beds of a hydrogenation catalyst upstream of a hydrolysis catalyst were used. Each experiment was carried out at 4 different temperatures (210 °C, 220 °C, 240 °C and 260 °C).

### Experiment 1 (according to the invention)

Hydrogenation catalyst: Nickel (3.5%) and molybdenum (15%) and P (2.2%) on alumina.
Hydrolysis catalyst: 5% Ce on alumina.

### Experiment 2 (according to the invention)

Hydrogenation catalyst: Nickel (3.5%) and molybdenum (15%) and P (2.2%) on alumina.
Hydrolysis catalyst: titania (no metal).

### Experiment 3 (comparison)

Hydrogenation catalyst: Nickel (4.5%) and molybdenum (13.5%) on amorphous silica-alumina.
Hydrolysis catalyst: 5% Ce on alumina.

### Experiment 4 (comparison)

Hydrogenation catalyst: Nickel (3.5%) and molybdenum (15%) and P (2.2%) on amorphous silica-alumina.
Hydrolysis catalyst: 5% Ce on alumina.

In Table 2, the composition of the gaseous effluents of the stacked bed reactor is shown.

**Table 1: Composition of the feed gas**

| component | vol% |
|---|---|
| H₂ | 2.5 |
| N₂ | 56.33 |
| CO | 1.2 |
| CO₂ | 18 |
| H₂S | 0.6 |
| COS | 0.05 |
| SO₂ | 0.3 |
| CS₂ | 0.02 |
| H₂O | 21 |

**Table 2: COS and CO conversions**

| Exp. no | Hydrogenation catalyst | Hydrolysis catalyst | T | COS conversion (%) | CO conversion (%) |
|---|---|---|---|---|---|
| 1 | NiMo/alumina | Ce/alumina | 210 | 97.88 | 46 |
| | | | 220 | 97.74 | 58 |
| | | | 240 | 97.17 | 66 |
| | | | 260 | 96.37 | 69 |
| 2 | NiMo/alumina | titania | 210 | 97.69 | 57 |
| | | | 220 | 97.65 | 60 |
| | | | 240 | 97.24 | 69 |
| | | | 260 | 95.68 | 76 |
| 3 | NiMo/asa | Ce/alumina | 210 | 97.82 | 32 |
| | | | 220 | 97.52 | 33 |
| | | | 240 | 96.82 | 42 |
| | | | 260 | 95.65 | 45 |
| 4 | NiMo/asa | Ce/alumina | 210 | 97.48 | 20 |
| | | | 220 | 97.43 | 21 |
| | | | 240 | 96.67 | 26 |
| | | | 260 | 95.01 | 27 |

## Claims

1. A process for reducing the total sulphur content of a gas stream comprising hydrogen sulphide and sulphur dioxide, which process comprises:
(a) contacting the gas stream comprising hydrogen sulphide and sulphur dioxide first with a hydrogenation catalyst and then with a hydrolysis catalyst, in the presence of a reducing gas and under hydrogenation conditions, to obtain a hydrogenated gas stream enriched in hydrogen sulphide; and
(b) removing hydrogen sulphide from the gaseous stream enriched in hydrogen sulphide,
wherein the hydrogenation catalyst comprises nickel and molybdenum on an alumina carrier and the hydrolysis catalyst is a catalyst capable of catalysing hydrolysis of carbonyl sulphide to form hydrogen sulphide.

2. A process according to claim 1, wherein the hydrogenation catalyst and the hydrolysis catalyst are contained in a single reactor in a stacked bed configuration.

3. A process according to claim 1 or 2, wherein the hydrolysis catalyst is a catalyst comprising titania.

4. A process according to claim 1 or 2, wherein the hydrolysis catalyst is a catalyst comprising CeO₂ supported on an alumina carrier.

5. A process according to any one of the preceding claims, wherein the hydrogenating conditions comprise an inlet temperature of the gas stream in the range of from 180 °C to 280 °C.

6. A process according to any one of the preceding claims, wherein the hydrogenating conditions comprise an inlet temperature of the gas stream in the range of from 200 °C to 260 °C.

7. A process according to any one of the preceding claims, wherein the gas stream comprising hydrogen sulphide and sulphur dioxide is an off-gas from a Claus unit for desulphurisation of a gas stream comprising hydrogen sulphide.
